**Europäisches Patentamt**

(19) **European Patent Office** (11) Publication number: **0 238 117**

**Office européen des brevets** **B1**

(12) # EUROPEAN PATENT SPECIFICATION

(45) Date of publication of the patent specification: **02.11.88** (51) Int. Cl.⁴: **F 16 L 37/28**

(21) Application number: **87200297.7**

(22) Date of filling: **24.02.87**

(54) Combined quick safety disconnection and control valve system for piping.

(30) Priority: **17.03.86 IT 1977886**

(43) Date of publication of application:
**23.09.87 Bulletin 87/39**

(45) Publication of the grant of the patent:
**02.11.88 Bulletin 88/44**

(84) Designated Contracting States:
**DE FR GB IT NL**

(56) References cited:
**CH-A-34 930**
**DE-C-1 131 472**

(73) Proprietor: **Bormioli, Giorgio, Via Galileo Galilei, 21, I-35100 Padova (IT)**

(72) Inventor: **Bormioli, Giorgio, Via Galileo Galilei, 21, I-35100 Padova (IT)**

(74) Representative: **Mittler, Enrico, c/o Marchi & Mittler s.r.l. Viale Lombardia, 20, I-20131 Milano (IT)**

## Description

The present invention relates to a combined quick safety disconnection and control valve system for piping (see e.g DE-C-1 131 472).

Quick coupling and disconnection devices are widely used in the connection of piping for conveyance of petroleum products. They ensure rapid connection and disconnection of piping when required by the difficult and sometimes critical conditions in which operations are performed.

Among known devices there are those which offer specific assurances of safety when disconnecting under any conditions, even emergency conditions under load. The quick disconnection device described in EP-A-153 773 in the name of the same applicant belongs to this category.

These safety devices can be used alone or in combination with simpler quick coupling devices which do not ensure performance of the disconnecting operation under emergency conditions.

It is advisable to associate with the abovementioned quick disconnection safety devices at the two ends of the pipes to be coupled the same number of control valves to provide hermetic closing of said pipes upon emergency disconnection of the coupling device to safeguard the product conveyed. There is also required an operational interconnection between the coupling device and the control valves which will ensure closing of the valves before disconnection of the coupling device.

The object of the present invention is to achieve a combined quick safety disconnection and control valve system which would ensure obligatory closing of the valves before disconnection of the quick coupling device.

Another object of the present invention is to accomplish a combined system of the aforesaid type which would be simple to build, easy to assemble, small and light, and provide minimal loss of head.

Another object of the present invention is to accomplish a combined system of the aforesaid type which would allow disconnection of the quick disconnection device even with pipes forming an angle with each other.

In view of said objects the present invention provides a combined quick safety disconnection and control valve system for piping, comprising a first and a second connector element equipped with respective control valves, a quick disconnection device connecting in a disconnectable manner said connector element and means for operational interconnection of said quick disconnection device with said control valves to subject disconnection of said connector elements to closing of said control valves characterized in that said quick disconnection device comprises a plurality of locking segments distributed circumferentially in a plane perpendicular to said connector elements and housed in a radially moving manner in respective radial slots of a first front portion of one of said connector elements which is superimposable on a corresponding second front portion of the other connector element, a first turning ring which is made to turn around said first front portion to act on said locking segments in such a manner as to push them into radial seats in said second front portion or receive them in their own radial seats to provide connection or disconnection respectively of said connector elements and a second turning ring rotated in relation to said first turning ring with a first idle travel part and a second travel part in rotating engagement with said first ring for rotation of the latter from the connection position to the disconnection position and vice versa and that said means of operational interconnection comprise a third turning ring operationally connected to said control valves to cause or follow the closing or opening movement thereof and a plurality of moving coupling segments which depending on the angular position of the third ring are movable from a first portion in which they interfere with said first idle travel part of the disconnection rotation of the second ring to be caused thereby to bring about simultaneous rotation of the third ring in the direction of closing of the control valves to a second position in which they engage with fixed locking seats to stop said closing rotation of the third ring and disengage from the second ring to allow free rotation thereof in said second travel part of the disconnecting rotation.

In accordance with the invention it is also provided that each control valve include a spherical body traversed by a truncated cone passage and that the respective connector element have a passage of smaller diameter at the respective front portion and a diameter progressively increasing toward the other end 50 as to form with the valve open a single path of flow with a cross section area progressively diminishing toward the coupling area of the two connector elements where the quick disconnection device is provided. In this manner it is possible to limit the overall size of the system without allowing harmful losses of head.

Again in accordance with the invention, the aforesaid passage of increasing diameter is made in a piece separable from the rest of the connector element so as to permit assembly and disassembly of the ball for insertion and rotation of said ball from the rear part of the connector element. This again allows limitation of the ross section of the front portion of the connecor element and hence of the space occupied by the system thus avoiding the need for wide-mouthed langes for passage of the ball at the front.

In accordance with the invention it is also provided that the cooperating front portions of the two connector elements are rounded in a substantially spherical form. This allows disconnection even with the piping stressed into an angle. Appropriate locator means, substantially a ball and a spherical socket cooperating in the two front portions, ensure perfect alignment of the two connector elements during coupling.

These and other characteristics of the present invention will be made clear by the following detailed description of one form of embodiment thereof illustrated as a non-limiting example in the annexed drawings wherein:

FIG. 1 shows an axial cross-section of a combined quick safety disconnection and control valve system in accordance with the invention in operating position along line I - I of FIG. 3,

FIG. 2 shows a top view of said system,

FIG. 3 shows a cross section of said system along line III - III of FIG. 1,

FIG. 4 shows an enlarged cross-section of said system along line IV - IV of FIG. 3,

FIGS. 5 and 6 show a cross section of said system as shown in FIG. 3 but in successive stages of disconnection,

FIG. 7 shows an enlarged cross-section of said detail of FIG. 4 along line VII - VII of FIG. 6,

FIG. 8 shows a cross-section of said system as shown in FIG. 3 at the time of disconnection, and

FIG. 9 shows an axial cross-section of said system along line IX - IX of FIG. 8.

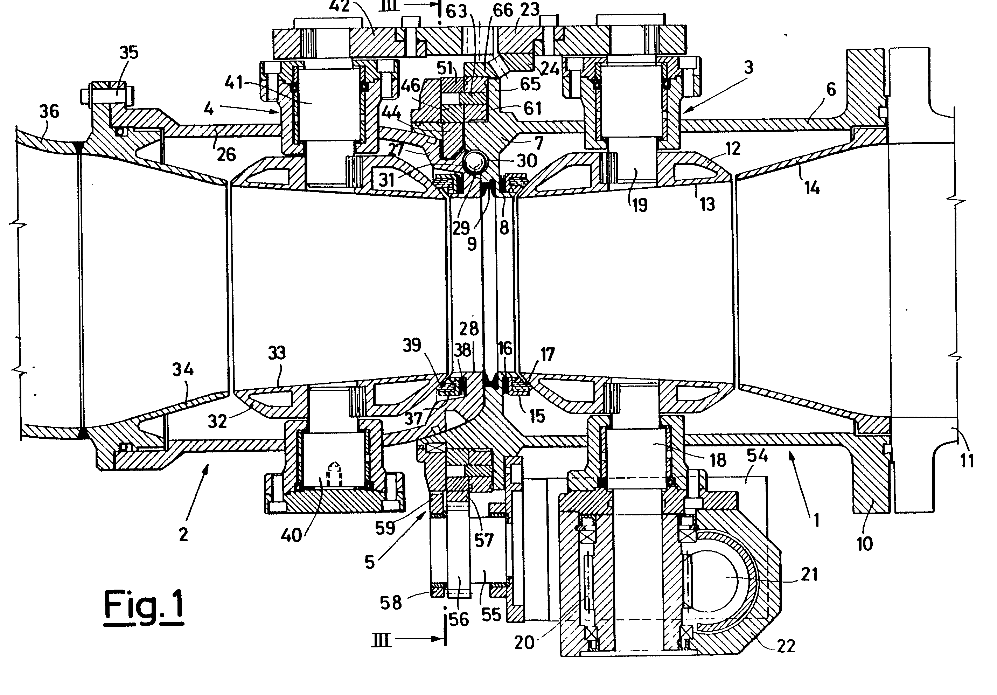

The drawings show a combined quick safety disconnection and control valve system which comprises two connector elements 1 and 2 equipped with respective control valves 3 and 4 and connectable together in the axially aligned condition of FIG. 1 by means of a quick safety disconnection device indicated as a whole by reference number 5.

The connector element 1 comprises a cylindrical tubular body 6 which at one end has a front portion with spherical concavity 7 which forms an internal passage of reduced diameter 8 fitted with a seal 9 while at the other end there is an external flange 10 designed for securing to a flanged pipe 11.

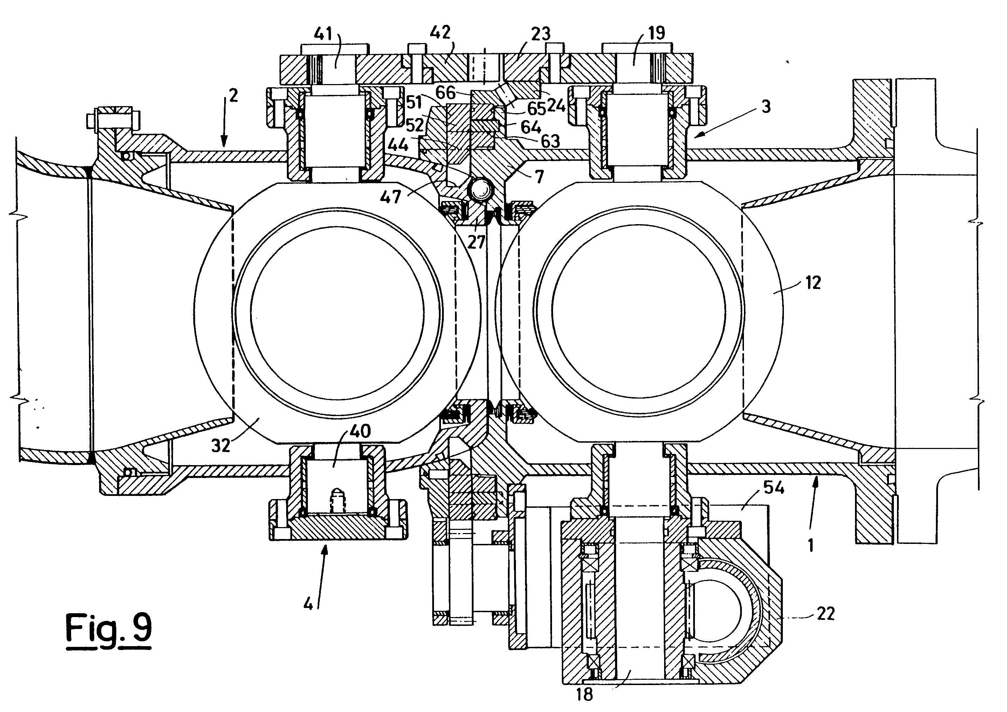

With the connector element 1 is associated as already stated the control valve 3 which has a spherical body 12 housed inside the cylindrical body 6 and is traversed by a truncated cone hole 13 whose smaller cross section area is equal to that of the internal passage 8 mentioned above (FIG. 1). A truncated cone tubular piece 14 affixed to the cylindrical body 6 connects the larger cross section of the spherical body 12 when in the open position of FIG. 1 to the flanged end of said cylindrical body. An axially moving ring 15 stressed by a spring 16 acts with an annular seal 17 on the spherical body 12 to provide the necessary seal when said spherical body is in the closed position of FIG. 9.

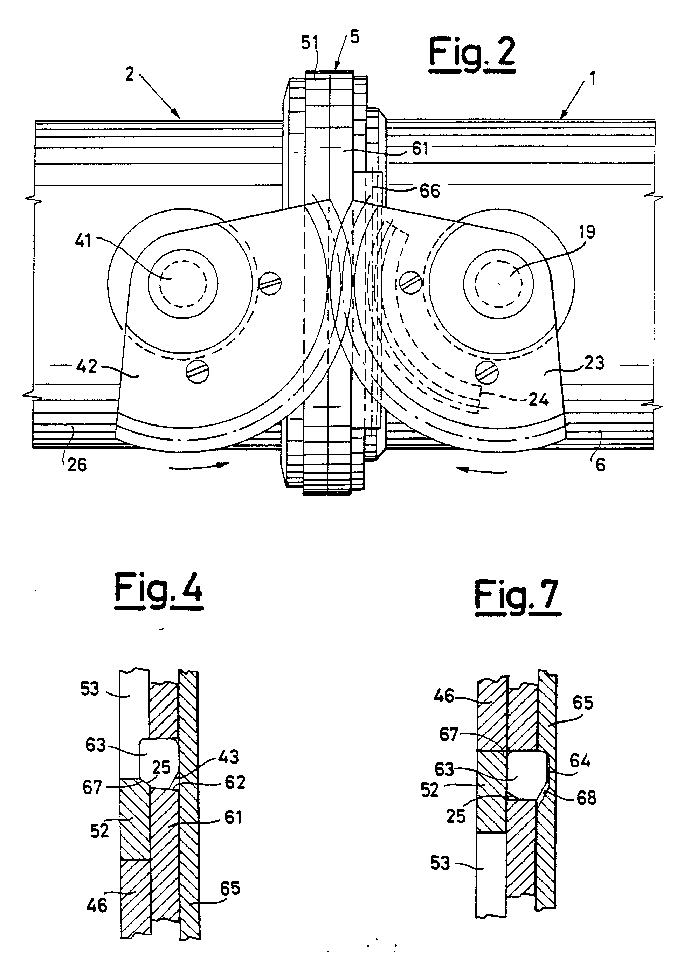

The spherical body 12 is born by a pair of opposing pins 18 and 19 supported in a turning manner by the cylindrical body 6 of the connector element 1. To the pin 18 is affixed a pinion 20 (FIG. 1) with which is engaged a rack 21 driven by a hydraulic piston activator 22 of the open centre type, i.e. with free circulation of the drive fluid from one part of the piston to the other part thereof. To the pin 19 is affixed a sector gear 23 (FIGS. 1 and 2) with an underlying toothed bow 24.

The connector element 2 comprises a tubular body 26 which at one end has a spherically convex front portion 27 which engages at a variable angle with the spherical recess of the front portion 6 of the connector element 1 and forms an internal passage 28 of the same diameter as the internal passage 8 of the connector element 1. A ball 29 held in a spherical cavity 31 of the front wall 27 of the connector element 2 cooperates with a corresponding spherical cavity 30 of the front wall 7 of the connector element 1 to secure correct alignment of the two connector elements when in the connected position as shown in FIG. 1.

With the connector element 2 is associated the control valve 4 which has a spherical body 32 housed inside the tubular body 26 and traversed by a truncated cone hole 33 whose smaller cross section area is equal to that of the internal passage 28 mentioned above (FIG. 1). A truncated cone tubular piece 34 affixed to the other end of the tubular body 26 by means of screws 35 connects the greater cross-section of the spherical body 32 when in the open position of FIG. 1 to any other end 36 of the assembly described and optionally coupled with another pipe such as 11 by means of a quick coupling device of a type simpler than the device 5 which will now be described. It could be for example a quick coupling device of the type described in EP-A-208 372, published 14.01.87 in the name of the same applicant. An axially moving ring 37 stressed by a spring 38 acts with an annular seal 32 to provide the necessary seal when said spherical body is in the closed position of FIG. 9.

The spherical body 32 is born by a pair of opposed pins 40 and 41 supported in a turning manner by the tubular body 26 of the connector element 2. To the pin 41 is affixed a sector gear 42 (FIGS. 1 and 2) which is engaged with the facing sector gear 23 of the connector element 1.

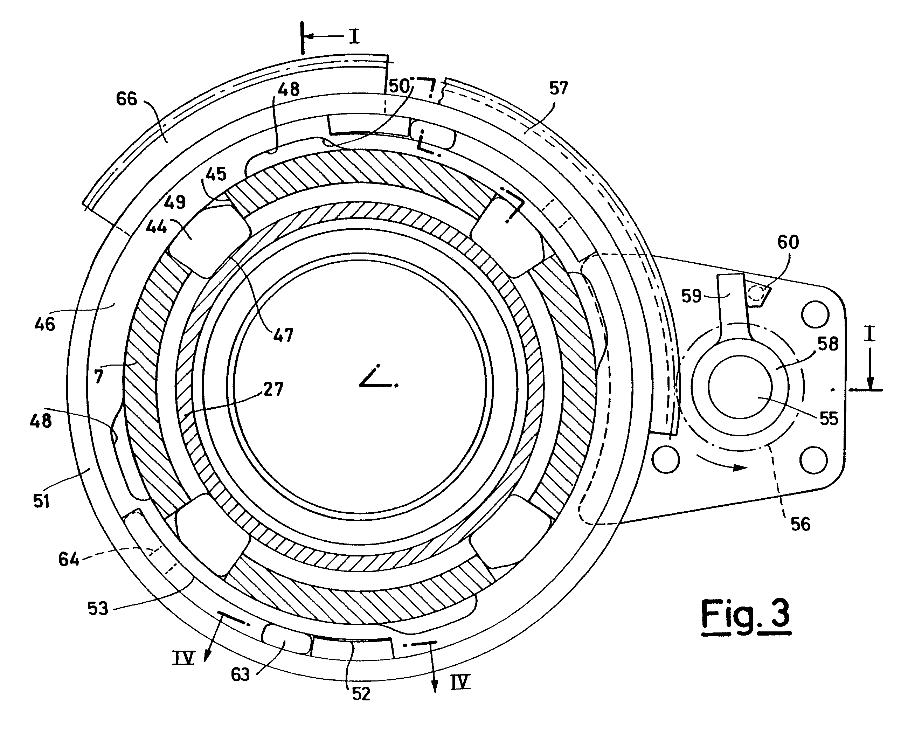

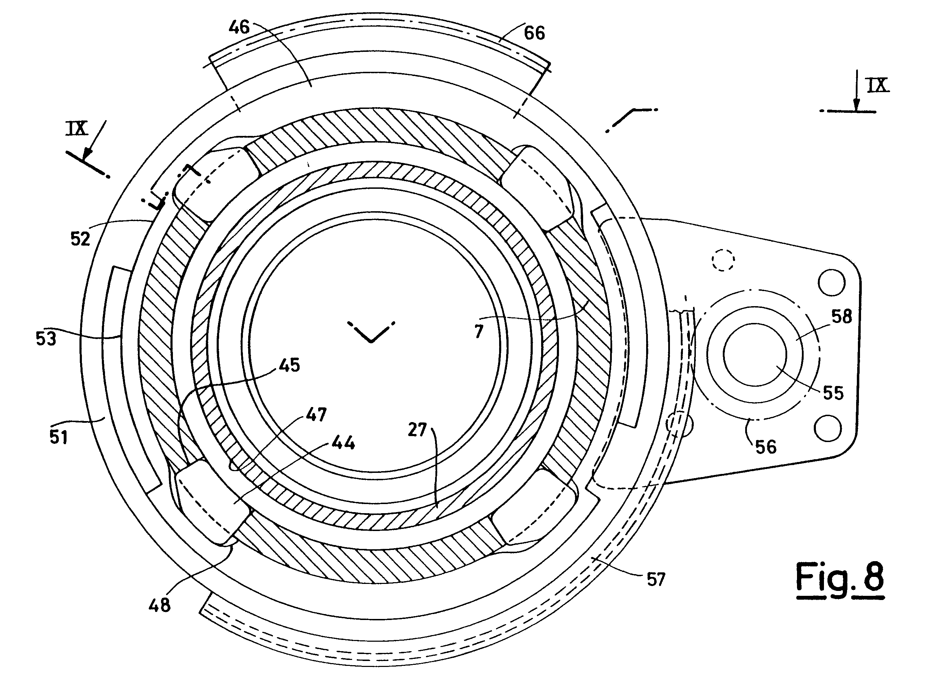

The quick safety disconnection device 5 comprises a plurality of locking segments 44 distributed circumferentially in a plane perpendicular to the common axis of the connector elements 1 and 2 (FIGS. 1 and 3) and housed in a radially moving manner in respective radial slots 45 of the front portion 7 of the connector element 1. With said locking segments 44 cooperates a first turning ring 46 which can rotate around said front portion 7 to push said locking segments into a radial annular seat 47 of the front portion 27 of the connector element 2 (FIGS. 1, 3, 5 and 6) or alternatively receive them in radial seats 48 (FIGS. 8 and 9) depending on the angular position of said ring 46. The first position corresponds with connection of the two connector elements 1 and 2 while the second position corresponds with disconnection of said connector elements. Bevels 49 and 50 are provided in the locking segments 44 and in the

5      **0 238 117**      6

receiving seats to facilitate moving of the former into the connected position.

Around said turning ring 46 rotates a second turning ring 51 fitted with radial internal teeth 52 housed in a sliding manner in more extended external peripheral cavities 53 of the internal ring 46 (FIGS. 3, 5, 6 and 8). The external ring 51 is rotated by a motor 54 on the shaft 55 of which is affixed a gear 56 engaged with a circular sector gear 57 affixed to the outer ring 51 (FIGS. 1 and 3). On the shaft 55 there is also fixed a collar 58 fitted with a radially protruding finger 59 with which cooperates a fixed locator 60 (FIG. 3) which sets the connected position.

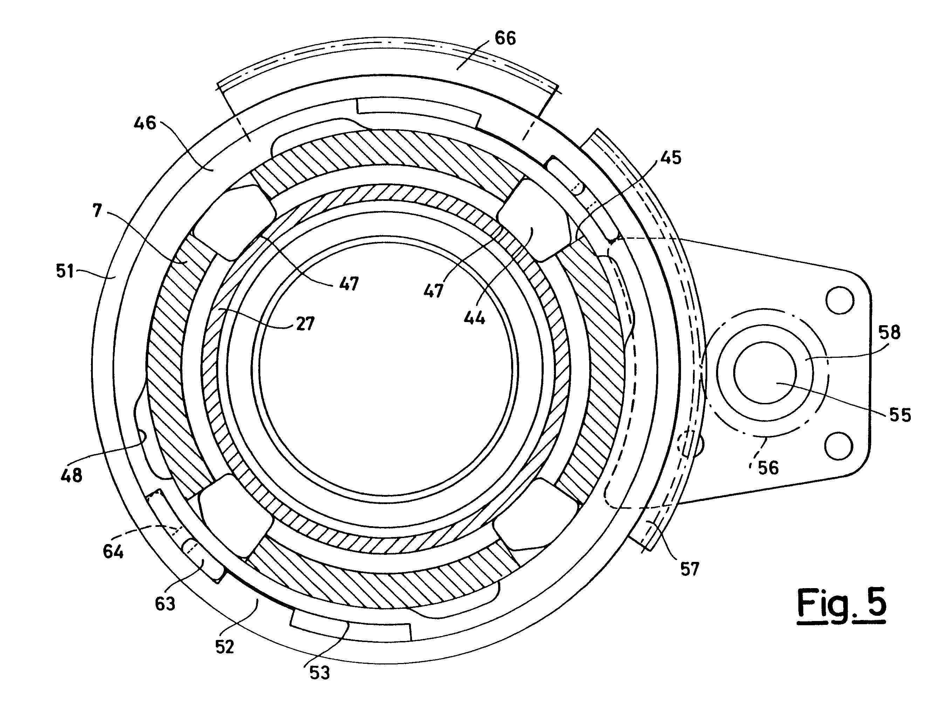

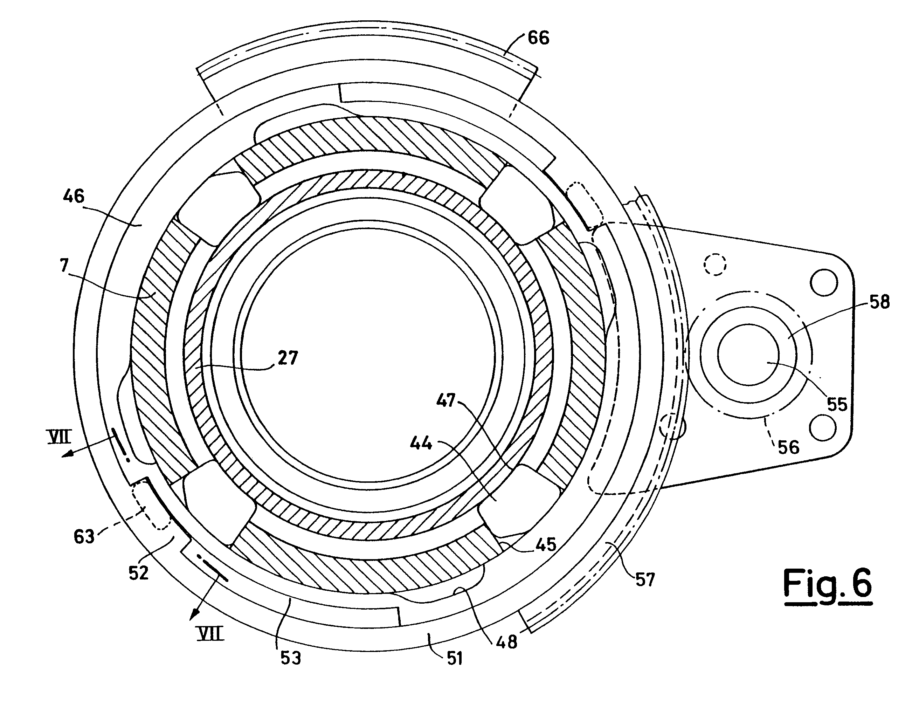

On the front portion 7 of the connector element 1 parallel to the abovementioned superimposed rings 46 and 51 there is also mounted a third turning ring 61 having diametrically opposed slots 62 in which are housed in a sliding manner respective coupling segments 63 which are axially movable depending on the angular position of the external ring 51 between the position of FIGS. 1, 3 and 4 in which they protrude into the peripheral cavity 53 of the internal ring 46 and then into the path of rotation of the radial teeth 52 of the external ring 51 and the position of FIGS. 6 - 9 in which they are received in fixed locking seats 64 made in the adjacent circumferential wall 65 of the front portion 7 of the connector element 1. To the turning ring 61 is affixed a toothed bow 66 engaged with the abovementioned toothed bow 24 of the connector element 1. Bevels 25, 43, 67 and 68 of the coupling segments 63 of the external ring 51 and of the fixed seats 64 (FIGS. 4 and 7) facilitate moving of the segments 63 from one to another of the positions of FIGS. 3 - 4 and 6 - 7.

To understand the operation of the assembly illustrated in the drawings let it be assumed that it is initially in the working position illustrated in FIGS. 1 and 3, i.e. with the two connector elements 1 and 2 engaged together by means of the quick disconnection device 5 whose ring 46 holds the locking segments 44 engaged in the radial seat 47 of the front portion 27 and the two control valves 3 and 4 in the open position. In this position the fluid product conveyed is free to move from one to the other of the pipes connected to the two connector elements 1 and 2.

To disconnection the two connector elements without losing any of the product it is necessary to first close the valves 3 and 4. To perform this the hydraulic motor 22 causes closing rotation of the spherical body 12 which through coupling of the sector gears 23 and 42 (FIGS. 1 and 2) causes simultaneous and like closing rotation of the spherical body 32 (FIG. 9). Simultaneously due to the engagement effect between the toothed bows 24 and 66 the turning ring 61 of the disconnection device 5 turns clockwise in relation to the position of FIG. 3 until it brings the coupling segments 63 in front of the fixed seats 64. At this point the motor 54 causes clockwise rotation of the external ring 51 which after a first idle travel part at the end of which it forces the coupling segments 63 out of the path of its teeth 52 and into the fixed seats 64 engages with the internal ring 46 to cause in a second travel part integral clockwise rotation of the internal ring 46 until it brings the radial seats 48 of the latter in front of the locking segments 44. Said segments then leave the seat 47 for the seats 48 (FIGS. 8 and 9) thus freeing the front portion 27 of the connector element 2 from its engagement with the front portion 7 of the connector element 1 and hence allowing disconnection of the two connector elements. It should be noted that thanks to the substantially spherical form of the cooperating surfaces of the front portions 7 and 27 disconnection is possibile even in case of angled positioning of the two connector elements.

It may also happen that immediate disconnection of the two connector elements be necessary while the control valves 3 and 4 are still open. In this case, starting again from the situation illustrated in FIGS. 1 and 3, the motor 54 is immediately started and rotates clockwise the external ring 51. The teeth 52 of the ring 51 then engage the coupling segments 63, entraining the ring 51 (FIG. 5) in clockwise rotation until the segments 63 are brought in front of the fixed seats 64 and forcing them to enter therein (FIG. 6). Rotation of the ring 61 causes through the bows 66 and 24 and the geared sectors 24 and 42 simultaneous closing rotation of the valves 3 and 4. Said rotation is allowed by the aforementioned passage of driving fluid from one part to the other of the piston of the hydraulic activator 22. From this moment onward the external ring 51 becomes integral with the internal ring 46 and causes its clockwise rotation to the disconnected position illustrated in FIGS. 8 and 9.

## Claims

1. Combined quick safety disconnection and control valve system for piping comprising a first and a second connector element (1, 2) equipped with respective control valves (3, 4), a quick disconnection device (5) connecting in a disconnectable manner said connector elements (1, 2) and means of operational interconnection (61, 63) of said quick disconnection device (5) with said control valves (3, 4) to make disconnection of said connector elements (1, 2) dependent upon prior closing of said control valves (3, 4) characterized in that said quick disconnection device (5) comprises a plurality of locking segments (44) distributed circumferentially in a plane perpendicular to the axis of said connector elements (1, 2) and housed in a radially moving manner in respective radial slots (45) of a first front portion (7) of one (1) of said connector elements (1, 2) which is superimposable on a corresponding second front

4

portion (27) of the other connector element (2), a first turning ring (46) rotatable around said first front portion (7) to act upon said locking segments (44) in such a manner as to push them into radial seats (47) of said second front portion (27) or receive them in its own radial seats (48) to connect with and disconnect from said connector elements (1, 2) respectively and a second turning ring (51) rotatable in relation to said first turning ring (46) with a first idle travel part and a second travel part in rotating engagement with said first ring (46) to secure rotation of the latter from the engaged position to the disengaged position or vice versa and said operational interconnection means (61, 63) comprising a third turning ring (61) connected to said control valves (3, 4) to cause or follow the closing or opening movement thereof and a plurality of moving coupling segments (63) which depending on the angular position of the third ring (61) are movable from a first position in which they interfere with said first idle travel part of the disengaging rotation of the second ring (51) to be driven thereby to cause simultaneous rotation of the third ring (61) in the direction of closing of the control valves (3, 4) to a second position in which they engage in fixed locking seats (64) to stop said closing rotation of the third ring (61) and disengage from the second ring (51) to allow free rotation of the latter in said second travel part of the disengagement rotation.

2. Combined system in accordance with claim 1 characterized in that said second ring (51) has teeth (52) housed in a sliding manner in peripheral cavities (53) of said first ring (46) into which protrude also in said first position said coupling segments (63).

3. Combined system in accordance with claim 1 characterized in that it further comprises first toothed means (23, 42) for mutual interconnection of said control valves (3, 4) and second toothed means (24, 66) for operational interconnection of said valves (3, 4) with said third turning ring (61).

4. Combined system in accordance with claim 1 characterized in that each control valve (3, 4) has a spherical body (12, 32) traversed by a truncated cone passage (13, 33) and the respective connector element (1, 2) has a passage of smaller diameter (8, 18) at the respective front portion (7, 17) and a passage (14, 34) of diameter progressively increasing toward the other end in such a manner as to form with the valves (3, 4) open a flow path with cross-section progressively diminishing toward the coupling zone of the two connector elements (1, 2).

5. Combined system in accordance with claim 4 characterized in that said passage of increasing diameter (14, 34) is made in a part separable from the rest of the connector element (1, 2).

6. Combined system in accordance with claim 1 characterized in that the cooperating front portions (7, 27) of the two connector elements (1, 2) display substantially complementary spherical forms.

7. Combined system in accordance with claim 6 characterized in that said front portions (7, 27) have complementary locator means (29, 30) for alignment of the two connector elements (1, 2) in the engaged position.

**Patentansprüche**

1. Kombiniertes Sicherheits-Schnelltrennungs- und Ventilregelsystem für Rohrleitungen, das ein erstes und ein zweites Verbindungselement (1, 2) aufweist, das mit zugeordneten Steuerventilen (3, 4) versehen ist, ferner eine Schnelltrennungseinrichtung (5) aufweist, welche auf eine trennbare Weise die Verbindungselemente (1, 2) verbindet, und eine Einrichtung (61, 63) zum betriebsmäßigen Verbinden der Schnelltrennungseinrichtung (5) mit den Steuerventilen (3, 4) aufweist, um die Verbindungselemente (1, 2) in Abhängigkeit von einem vorherigen Schließen der Steuerventile (3, 4) zu trennen, dadurch <u>gekennzeichnet</u>, daß die Schnelltrennungseinrichtung (5) eine Mehrzahl von Sperrsegmenten (44) aufweist, die in Umfangsrichtung in einer Ebene senkrecht zur Achse der Verbindungselemente (1, 2) verteilt und auf radial bewegbare Weise in zugeordneten Radialschlitzen (45) eines ersten vorderen Abschnitts (7) eines (1) der Verbindungselemente (1, 2) untergebracht ist, der auf einem zugeordneten zweiten vorderen Abschnitt (27) des anderen Verbindungselements (2) überlagerbar ist, daß ein erster Drehring (46) drehbar um den ersten vorderen Abschnitt (7) ist, um die Sperrsegmente (14) derart zu beaufschlagen, daß diese um die Radialschlitze (47) des zweiten vorderen Abschnitts (27) gedrückt oder in ihren eigenen Radialsitzen (48) aufgenommen werden, um diese jeweils mit den Verbindungselementen (1, 2) zu verbinden und von diesen zu trennen, daß ein zweiter Drehring (51) drehbar bezüglich des ersten Drehrings (46) vorgesehen ist, der einen ersten leerlaufenden Teil und einen zweiten laufenden Teil in Dreheingriff mit dem ersten Ring (46) hat, um die Drehung des letzteren von der Eingriffsposition zu der Löseposition anzuhalten, und daß die Arbeitsverbindungseinrichtung (61, 63) einen dritten Drehring (61) aufweist, der mit den Steuerventilen (3, 4) verbunden ist, um die Schließ- oder Öffnungsbewegung desselben zu bewirken oder diesem zu folgen, sowie eine Mehrzahl von sich bewegenden Kupplungssegmenten (63) aufweist, die in Abhängigkeit von der Winkelstellung des dritten Rings (61) von einer ersten Stellung, in der sie in Eingriff mit dem ersten der laufenden Teile bei der Lösedrehung des zweiten Ringes (51) kommen, um hierdurch getrieben zu werden und eine gleichzeitige Drehung des dritten Rings (61) in Schließrichtung der Steuerventile (3, 4) zu bewirken, zu einer zweiten Stellung bewegbar sind, in der sie in Eingriff mit den festen Sperrsitzen (64) sind, um die Schließdrehung des dritten Rings (61) anzuhalten und sich von dem zweiten Ring (51) zu trennen, so daß eine freie Drehung des letzteren in dem zweiten laufenden Teil der Lösedrehung ermöglicht wird.

2. Kombiniertes System nach Anspruch 1, dadurch gekennzeichnet, daß der zweite Ring (51) Zähne (52) hat, die gleitbeweglich in Umfangshohlräumen (53) des ersten Rings (46) aufgenommen sind, in die in der ersten Stellung auch die Kupplungssegmente (63) ragen.

3. Kombiniertes System nach Anspruch 1, dadurch gekennzeichnet, daß es ferner erste mit Zähnen versehene Einrichtungen (23, 42) zum wechselseitigen Verbinden der Steuerventile (3, 4) und zweite mit Zähnen versehene Einrichtungen (24, 66) zum betriebsmäßigen Verbinden der Ventile (3, 4) mit dem dritten Drehring (61) aufweist.

4. Kombiniertes System nach Anspruch 1, dadurch gekennzeichnet, daß jedes Steuerventil (3, 4) einen kugelförmigen Körper (12, 32) hat, der von einem kegelstumpfförmigen Durchgang (13, 33) durchsetzt ist, und daß das zugeordnete Verbindungselement (1, 2) einen Durchgang (8, 18) mit kleinerem Durchmesser an dem entsprechenden vorderen Abschnitt (7, 17) und einen Durchgang (14, 34) mit allmählich in Richtung des anderen Endes derart größer werdenden Durchmesser hat, daß mit den Ventilen (3, 4) ein offener Strömungsweg gebildet wird, der einen in Richtung zur Verbindungszone der beiden Verbindungselemente (1, 2) progressiv abnehmenden Querschnitt hat.

5. Kombiniertes System nach Anspruch 4, dadurch gekennzeichnet, daß der Durchgang (14, 34) mit größer werdendem Durchmesser in einem Teil vorgesehen ist, das von dem Rest des Verbindungselements (1, 2) trennbar ist.

6. Kombiniertes System nach Anspruch 1, dadurch gekennzeichnet, daß die zusammenarbeitenden vorderen Abschnitte (7, 27) der beiden Verbindungselemente (1, 2) im wesentlichen komplementäre kugelförmige Ausgestaltung haben.

7. Kombiniertes System nach Anspruch 6, dadurch gekennzeichnet, daß die vorderen Abschnitte (7, 27) komplementäre Ausrichteinrichtungen (29, 30) zum Ausrichten der beiden Verbindungselemente (1, 2) in der Eingriffsposition haben.

**Revendications**

1. Système combiné de séparation rapide de sûreté et de soupape de réglage pour tuyauteries, comportant un premier et un second éléments de raccordement (1, 2) équipés de soupapes de réglage correspondantes (3, 4), un dispositif de séparation rapide (5) reliant d'une manière séparable lesdits éléments de raccordement (1, 2) et un moyen de liaison opérationnelle (61, 63) du dispositif de séparation rapide (5) avec les soupapes de réglage (3, 4) pour réaliser une séparation des éléments de raccordement (1, 2) dépendant de la fermeture préalable des soupapes de réglage (3, 4), caractérisé en ce que le dispositif de séparation rapide (5) comporte une pluralité d'organes de verrouillage (44) répartis circonférentiellement dans un plan perpendiculaire à l'axe desdits éléments de raccordement (1, 2) et logés de manière radialement mobile dans des encoches radiales correspondantes (45) d'une première partie antérieure (7) d'un (1) desdits éléments de raccordement (1, 2) qui est superposable sur une seconde partie antérieure correspondante (27) de l'autre élément de raccordement (2), une première bague tournante (46) pouvant tourner autour de ladite première partie antérieure (7) pour agir sur lesdits organes de verrouillage (44) de manière à les pousser jusque dans des logements radiaux (47) de ladite seconde partie antérieure (27) ou à les recevoir dans ses propres logements radiaux (48), respectivement pour le raccordement et la séparation d'avec lesdits éléments de raccordement (1, 2), et une seconde bague tournante (51) pouvant tourner par rapport à ladite première bague tournante (46) avec une première partie de course à vide et une seconde partie de course en engagement tournant avec ladite première bague (46) pour assurer la rotation de cette dernière depuis la position engagée jusqu'à la position dégagée ou réciproquement, et ledit moyen de liaison opérationnelle (61, 63) comprenant une troisième bague tournante (61) reliée auxdites soupapes de réglage (3, 4) pour provoquer ou accompagner le mouvement de fermeture ou d'ouverture de celles-ci, et une pluralité d'organes d'accouplement mobiles (63) qui, en fonction de la position angulaire de la troisième bague (61), sont mobiles depuis une première position dans laquelle ils interviennent sur ladite première partie de course à vide de la rotation de dégagement de la seconde bague (51) pour être entraînés par celle-ci afin de provoquer la rotation simultanée de la troisième bague (61) dans le sens de la fermeture des soupapes de réglage (3, 4) jusqu'à une seconde position dans laquelle ils s'engagent dans des logements de verrouillage fixes (64) pour arrêter ladite rotation de la troisième bague (61) dans le sens de la fermeture, et dans laquelle ils se dégagent de la seconde bague (51) pour permettre une libre rotation de cette dernière dans la seconde partie de course de la rotation en vue du dégagement.

2. Système combiné selon la revendication 1, caractérisé en ce que ladite seconde bague (51) a des dents (52) logées de manière coulissante dans des cavités périphériques (53) de ladite première bague (46) dans lesquelles lesdits organes d'accouplement (63) dépassent aussi dans ladite première position.

3. Système combiné selon la revendication 1, caractérisé en ce qu'il comporte en outre un premier moyen denté (23, 42) pour l'interconnexion mutuelle desdites soupapes de réglage (3, 4) et un second moyen denté (24, 66) pour la liaison opérationnelle desdites soupapes (3, 4) avec ladite troisième bague tournante (61).

4. Système combiné selon la revendication 1, caractérisé en ce que chaque soupape de réglage (3, 4) a un corps sphérique (12, 32) traversé par un passage tronconique (13, 33), et l'élément de reccordement (1, 2) correspondant a un passage de diamètre plus petit (8, 18) au niveau de la partie antérieure (7, 17) correspondante et un passage (14, 34) de diamètre augmentant progressivement vers l'autre extrémité de façon à former avec les soupapes (3, 4) ouvertes un parcours d'écoulement dont la section transversale diminue progressivement vers la zone d'accouplement des deux éléments de raccordement (1, 2).

5. Système combiné selon la revendication 4, caractérisé en ce que ledit passage de diamètre croissant (14, 34) constitue une partie séparable du reste de l'élément de raccordement (1, 2).

6. Système combiné selon la revendication 1, caractérisé en ce que les parties antérieures (7, 27) qui coopèrent des deux éléments de raccordement (1, 2) présentent des profils sphériques sensiblement complémentaires.

7. Système combiné selon la revendication 6, caractérisé en ce que lesdites parties antérieures (7, 27) ont des moyens de positionnement complémentaires (29, 30) pour l'alignement des deux éléments de raccordement (1, 2) dans la position engagée.

Fig.1

## Fig. 2

## Fig. 4

## Fig. 7

Fig. 3

Fig. 5

Fig.6

Fig. 8

0 238 117

Fig. 9

0 238 117